# EUROPÄISCHE PATENTSCHRIFT

(11) **EP 3 946 830 B1**
(45) Veröffentlichungstag und Bekanntmachung des Hinweises auf die Patenterteilung: **03.05.2023**
(21) Anmeldenummer: 20717772.6
(22) Anmeldetag: 19.03.2020
(51) Int. Cl.: B25J 9/16, G05B 19/423

(54) **LAGEWINKELANZEIGE BEIM MANUELLEN FÜHREN EINES ROBOTERMANIPULATORS**
ORIENTATION ANGLE DISPLAY DURING THE MANUAL GUIDANCE OF A ROBOT MANIPULATOR
AFFICHAGE DE LA POSITION ANGULAIRE LORS DU GUIDAGE MANUEL D'UN MANIPULATEUR DE ROBOT

(30) Priorität: 28.03.2019 DE 102019107969
(43) Veröffentlichungstag der Anmeldung: 09.02.2022
(73) Patentinhaber: Franka Emika GmbH, 80797 München (DE)
(72) Erfinder: ROKAHR, Tim, 81245 München (DE); SPENNINGER, Andreas, 85757 Karlsfeld (DE)
(74) Vertreter: Rösler Rasch van der Heide & Partner
(86) Internationale Anmeldenummer: PCT/EP2020/057563
(87) Internationale Veröffentlichungsnummer: WO 2020/193348

(56) Entgegenhaltungen:
- DE-B3-102016 000 187
- THOMAS FRED HERKOMMER: "Hochgenaue dynamische Bahnvermessung von Industrierobotern", FORSCHUNG IM INGENIEURWESEN: ENGINEERING RESEARCH, Bd. 60, Nr. 10, 1. Oktober 1994 (1994-10-01), Seiten 254-260, XP055706654, DE ISSN: 0015-7899, DOI: 10.1007/BF02601314
- BERNARDINO BENITO SALMERON-QUIROZ ET AL: "Global estimation of robot's attitude via quaternion and data fusion", INDUSTRIAL ELECTRONICS AND APPLICATIONS (ICIEA), 2012 7TH IEEE CONFERENCE ON, IEEE, 18. Juli 2012 (2012-07-18), Seiten 524-529, XP032268449, DOI: 10.1109/ICIEA.2012.6360784 ISBN: 978-1-4577-2118-2
- MICHAEL LEWIS ET AL: "Gravity-Referenced Attitude Display for Mobile Robots: Making Sense of What We See", IEEE TRANSACTIONS ON SYSTEMS, MAN AND CYBERNETICS. PART A:SYSTEMS AND HUMANS, IEEE SERVICE CENTER, PISCATAWAY, NJ, US, Bd. 37, Nr. 1, 1. Januar 2007 (2007-01-01) , Seiten 94-105, XP011145423, ISSN: 1083-4427, DOI: 10.1109/TSMCA.2006.886353

## Beschreibung

Die Erfindung betrifft ein Robotersystem mit einem Robotermanipulator und mit einer visuellen Ausgabeeinheit sowie ein Verfahren zum Ausgeben einer aktuellen Orientierung eines Roboterglieds eines Robotermanipulators gegenüber dem Schwerkraftvektor an einer visuellen Ausgabeeinheit.

Aufgabe der Erfindung ist es, das manuelle Führen eines Robotermanipulators dahingehend zu verbessern, dass ein Anwender beim manuellen Führen das Roboterglied des Robotermanipulators genauer in seiner Orientierung ausrichten kann.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Robotersystem mit einem Robotermanipulator und mit einer visuellen Ausgabeeinheit, wobei der Robotermanipulator ein Roboterglied aufweist und das Roboterglied eine inertiale Messeinheit aufweist, wobei die inertiale Messeinheit dazu ausgeführt ist, die Richtung eines Schwerkraftvektors in einem unbewegten Zustand des Roboterglieds zu ermitteln, und über eine Vielzahl von Zeitpunkten eine aktuelle Orientierung des Roboterglieds gegenüber dem Schwerkraftvektor mittels Lagekreisel zu ermitteln, und die aktuelle Orientierung des Roboterglieds gegenüber dem Schwerkraftvektor an die visuelle Ausgabeeinheit zu übermitteln, und wobei die visuelle Ausgabeeinheit dazu ausgeführt ist, die aktuelle Orientierung des Roboterglieds gegenüber dem Schwerkraftvektor anzuzeigen.

Bevorzugt ist das Roboterglied ein Endeffektor, wobei der Endeffektor an einem distalen Ende des Robotermanipulators angeordnet ist und der Endeffektor die inertiale Messeinheit aufweist.

Eine inertiale Messeinheit ist insbesondere eine Messeinheit, die unter Ausnutzung von Trägheit kinematische Daten erfasst. Insbesondere können von der inertialen Messeinheit Beschleunigungen von Beschleunigungssensoren erfasst werden und Orientierungen zwischen einem Gehäuse der inertialen Messeinheit und Lagekreiseln ermittelt werden. Eine Orientierung des Roboterglieds wird bevorzugt durch Lagewinkel, bevorzugt Eulerwinkel, oder alternativ bevorzugt durch Quaternionen, gegenüber einem erdfesten Koordinatensystem ausgedrückt. Die Orientierung des Roboterglieds ist daher unabhängig von der Position des Roboterglieds gegenüber dem erdfesten Koordinatensystem.

Ein Robotersystem, wobei eine inertiale Messeinheit dazu ausgeführt ist, die Richtung eines Schwerkraftvektors in einem unbewegten Zustand des Roboterglieds zu ermitteln, und über eine Vielzahl von Zeitpunkten eine aktuelle Orientierung des Roboterglieds gegenüber dem Schwerkraftvektor mittels Lagekreisel zu ermitteln, ist aus die Veröffentlichung THOMAS FRED HERKOMMER: "Hochgenaue dynamische Bahnvermessung von Industrierobotern",FORSCHUNG IM INGENIEURWESEN: ENGINEERING RESEARCH, Bd. 60, Nr. 10, 1. Oktober 1994, Seiten 254-260 bekannt.

Der Schwerkraftvektor ist der Vektor der lokal am Robotermanipulator vorherrschenden Erdanziehung, und ist gekennzeichnet durch einen eine Beschleunigung ausdrückenden und zeitlich konstanten Betrag und durch eine Richtung.

Die visuelle Ausgabeeinheit ist insbesondere dazu ausgeführt, die aktuelle Orientierung des Roboterglieds gegenüber dem Schwerkraftvektor in Echtzeit relativ zum, insbesondere gleichzeitig mit dem, Ermitteln der Orientierung des Roboterglieds anzuzeigen.

Der Begriff "Echtzeit" ist ein feststehender Begriff aus der Rechnertechnik und vernachlässigt unvermeidbare Latenzen, da unendlich kurze Rechenzeiten naturgemäß nicht möglich sind. Unter dem Begriff "Echtzeit" wird daher eine näherungsweise simultane Vorgangsausführung verstanden, wobei die Totzeiten und Latenzen zwischen den Vorgängen (im konkreten Fall sind die Vorgänge das Erfassen der aktuellen Orientierung des Roboterglieds gegenüber dem Schwerkraftvektor und das Anzeigen dieser Orientierung) weit unter der menschlichen Wahrnehmungsschwelle liegen. Somit wird vorteilhaft dem Anwender in nahezu exakt gleicher Zeit die Orientierung des Roboterglieds gegenüber dem Schwerkraftvektor angezeigt, wie diese ermittelt wird. Auch das Ermitteln der aktuellen Orientierung des Roboterglieds gegenüber dem Schwerkraftvektor erfolgt in diesem Sinne in Echtzeit, das heißt mit nur vernachlässigbaren Latenzen. Das Gleiche gilt für den Begriff "gleichzeitig".

Es ist eine vorteilhafte Wirkung der Erfindung, dass dem Anwender Rückmeldung gegeben wird, in welcher Orientierung sich das Roboterglied des Robotermanipulators relativ zum Schwerkraftvektor befindet. Im Gegensatz zu einer Wasserwaage erlauben die Lagekreisel auch bei einer beschleunigten Bewegung des Roboterglieds, bzw. der initialen Messeinheit, dass unabhängig von dem Bewegungszustand des Lagekreisels die korrekte Orientierung des Roboterglieds gegenüber dem Schwerkraftvektor ermittelt wird. Eine Wasserwaage dagegen würde auf eine von einer Bewegung her verursachten Beschleunigung tangential zum Wasserstand reagieren. Wird dagegen im Stillstand des Roboterglieds die Richtung des Schwerkraftvektors ermittelt, wird keine andere störende Beschleunigung insbesondere durch Beschleunigungssensoren fälschlicherweise erfasst. Die lagewinkelstabilen Lagekreisel können dabei auch dann vorteilhaft die aktuelle Orientierung des Roboterglieds gegenüber dem Schwerkraftvektor ermitteln, wenn eine Beschleunigung durch Bewegung des Roboterglieds vorliegt, beispielsweise eine Coriolis-Beschleunigung oder eine Zentrifugalbeschleunigung.

Gemäß einer vorteilhaften Ausführungsform sind die Lagekreisel mechanische, drehende Kreisel. Drehende mechanische Kreisel sind insbesondere kardanisch aufgehängt und drehen sich mit relativ hoher Drehzahl. Je höher die Drehzahl, umso intensiver wirkt die Kreiselstabilität, die bewirkt, dass die mechanischen Kreisel in ihrer ursprünglichen Orientierung verbleiben, auch wenn das Gehäuse, in dem die Kreisel kardanisch aufgehängt sind, gegenüber der Erde in ihrer Orientierung geändert werden. Die mechanischen Kreisel sind daher lagewinkelstabil, sodass durch die relative Orientierung des Gehäuses der inertialen Messeinheit gegenüber den lagestabilen Kreiseln immer auch eine relative Orientierung der inertialen Messeeinheit und damit auch eine relative Orientierung des Roboterglieds gegenüber dem Schwerkraftvektor bestimmbar ist, da die inertiale Messeinheit körperfest an dem Roboterglied angeordnet ist und die Richtung des Schwerkraftvektors gemäß dem ersten Aspekt der Erfindung ermittelt wird.

Gemäß einer weiteren vorteilhaften Ausführungsform sind die Lagekreisel optische Kreisel. Optische Kreisel weisen insbesondere einen Ring aus einem lichtleitenden Material, insbesondere Glasfasern auf. Unter Ausnutzung der Tatsache, dass die Lichtgeschwindigkeit immer konstant ist, kann aus der Zeitdauer für einen Umlauf insbesondere eines Laserstrahls in dem lichtleitenden Ring auf eine relative Orientierungsänderung des optischen Kreisel geschlossen werden, woraus eine aktuelle Orientierung des optischen Kreisel gegenüber seiner Ausgangsorientierung ermittelt werden kann. Der optische Kreisel und ein mechanischer Kreisel weisen daher die gleiche Funktion auf, wenn auch die Information über die Orientierung der inertialen Messeinheit über eine Ausgangsorientierung mit anderen technischen Mitteln erzeugt wird.

Gemäß einer weiteren vorteilhaften Ausführungsform weist die visuelle Ausgabeeinheit ein erstes Anzeigeelement und ein zweites Anzeigeelement auf, wobei eine Verschiebung und/oder eine Verdrehung zwischen dem ersten Anzeigeelement und dem zweiten Anzeigeelement mit zumindest einem Winkel um eine jeweilige Achse gemäß der relativen Orientierung des Roboterglieds gegenüber dem Schwerkraftvektor korreliert.

Bevorzugt ist die jeweilige Achse körperfest zum Roboterglied.

Gemäß einer weiteren vorteilhaften Ausführungsform weist die visuelle Ausgabeeinheit ein erstes Anzeigeelement und ein zweites Anzeigeelement auf, wobei ein erster Winkel des ersten Anzeigeelements gegenüber dem zweiten Anzeigeelement in jedem aus der Vielzahl der Zeitpunkte mit einem Winkel um eine erste Achse gemäß der relativen Orientierung des Roboterglieds gegenüber dem Schwerkraftvektor korreliert.

Im einfachsten Fall ist das erste Anzeigeelement zusammen mit dem zweiten Anzeigeelement in einer gemeinsamen Ebene angeordnet, wobei sich das erste Anzeigeelement gegenüber dem zweiten Anzeigeelement verdrehen kann. Der relative Drehwinkel des ersten Anzeigeelements gegenüber dem zweiten Anzeigeelement entspricht dabei einem relativen Winkel um genau eine Achse des Roboterglieds gegenüber dem Schwerkraftvektor. Vorteilhaft ist diese Ausführungsform besonders dann für einen Anwender intuitiv erfassbar, wenn nur genau ein Winkel des Roboterglieds gegenüber dem Schwerkraftvektor relevant ist.

Erfindungsgemäß ist die visuelle Ausgabeeinheit ein LED-Array. Das LED-Array ist insbesondere eine Aneinanderreihung von einzelnen LEDs (Licht emittierende Dioden), wobei bevorzugt die LEDs in einer Reihe angeordnet sind, und der Betrag eines Winkels um eine Achse gemäß der Orientierung des Roboterglieds gegenüber dem Schwerkraftvektor mit der Zahl der beleuchteten LEDs auf einer Hälfte der Aneinanderreihung korreliert. Vorteilhaft wird hierdurch dem Anwender sehr intuitiv und mit technisch einfachen Mitteln visuell dargestellt, welcher Winkel des Roboterglieds gegenüber dem Schwerkraftvektor um die betrachtete Achse aktuell vorliegt.

Gemäß einer weiteren vorteilhaften Ausführungsform ist die visuelle Ausgabeeinheit eine Anzeige, die dazu ausgeführt ist, einen numerischen Wert auszugeben. Bevorzugt wird ein einfaches LCD Display dafür verwendet. Gemäß einer weiteren vorteilhaften Ausführungsform ist die visuelle Ausgabeeinheit ein Projektor. Gemäß einer weiteren vorteilhaften Ausführungsform ist die visuelle Ausgabeeinheit ein Laserstrahler.

Gemäß einer weiteren vorteilhaften Ausführungsform ist die inertiale Messeinheit dazu ausgeführt, die Richtung des Schwerkraftvektors in einem unbewegten Zustand des Roboterglieds mittels Beschleunigungssensoren zu ermitteln. Die Beschleunigungssensoren sind insbesondere translatorische Beschleunigungssensoren, wobei weiterhin bevorzugt drei Beschleunigungssensoren in drei jeweils paarweise aufeinander senkrecht stehenden Achsen angeordnet sind. Liegt im allgemeinen nicht einer der drei Beschleunigungssensoren von Natur aus genau in Richtung des Schwerkraftvektors, so kann über die einzelnen Komponenten der jeweiligen Beschleunigungssensoren auf eine Richtung des Schwerkraftvektors geschlossen werden. Dies erfolgt bevorzugt über ein einfaches Kräftedreieck und simple geometrische Berechnungen.

Gemäß einer weiteren vorteilhaften Ausführungsform ist die inertiale Messeinheit dazu ausgeführt, auf Basis von mit den Beschleunigungssensoren gemessenen translatorischen Beschleunigungen und auf Basis einer aktuellen Orientierung des Roboterglieds eine aktuelle Relativposition gegenüber einer Position in dem unbewegten Zustand des Roboterglieds zu ermitteln.

Vorteilhaft wird es dem Anwender gemäß dieser Ausführungsform ermöglicht, nicht nur über die Rückmeldung der Orientierung des Roboterglieds gegenüber dem Schwerkraftvektor die Orientierung des Roboterglieds genauer zu bestimmen, sondern auch die Position des Roboterglieds relativ beispielsweise zu einer Basis des Robotermanipulators oder relativ zu einer Ausgangslage vor dem manuellen Führen zu bestimmen. Auf diese Weise wird es dem Anwender vorteilhaft vereinfacht, einen Einlernvorgang für den Robotermanipulator durch manuelles Führen genau auszuführen, sowohl betreffend die Orientierung des Roboterglieds gegenüber der Erde als auch betreffend eine Position des Roboterglieds.

Ein weiterer Aspekt der Erfindung betrifft ein Verfahren zum Ausgeben einer aktuellen Orientierung eines Roboterglieds eines Robotermanipulators gegenüber dem Schwerkraftvektor an einer visuellen Ausgabeeinheit, aufweisend die Schritte:
- Ermitteln einer Richtung eines Schwerkraftvektors in einem unbewegten Zustand des Roboterglieds mittels einer am Roboterglied angeordneten inertialen Messeinheit,
- Ermitteln einer aktuellen Orientierung des Roboterglieds gegenüber dem Schwerkraftvektor mittels Lagekreisel der inertialen Messeinheit über eine Vielzahl von Zeitpunkten,
- Übermitteln der aktuellen Orientierung des Roboterglieds gegenüber dem Schwerkraftvektor von der inertialen Messeinheit an die visuelle Ausgabeeinheit, und
- Anzeigen der aktuellen Orientierung des Roboterglieds gegenüber dem Schwerkraftvektor an der visuellen Ausgabeeinheit.

Das Anzeigen der aktuellen Orientierung des Roboterglieds gegenüber dem Schwerkraftvektor an der visuellen Ausgabeeinheit erfolgt insbesondere online, das heißt in Echtzeit relativ zum, insbesondere gleichzeitig mit dem, Ermitteln der aktuellen Orientierung des Roboterglieds gegenüber dem Schwerkraftvektor.

Vorteile und bevorzugte Weiterbildungen des vorgeschlagenen Verfahrens ergeben sich durch eine analoge und sinngemäße Übertragung der im Zusammenhang mit dem vorgeschlagenen Robotersystem vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein Robotersystem mit einem Robotermanipulator und mit einer visuellen Ausgabeeinheit gemäß einem Ausführungsbeispiel der Erfindung,
- Fig. 2: eine visuelle Ausgabeeinheit gemäß einem weiteren Ausführungsbeispiel der Erfindung, und
- Fig. 3: ein Verfahren zum Ausgeben einer aktuellen Orientierung eines Roboterglieds eines Robotermanipulators gegenüber dem Schwerkraftvektor an einer visuellen Ausgabeeinheit gemäß einem weiteren Ausführungsbeispiel der Erfindung,

Die Darstellungen in den Figuren sind schematisch und nicht maßstäblich.

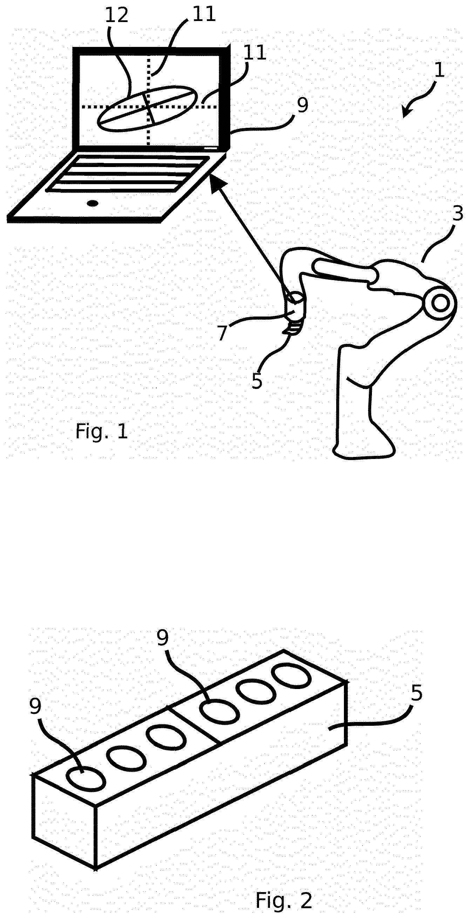

Fig. 1 zeigt ein Robotersystem 1 mit einem Robotermanipulator 3 und mit einer visuellen Ausgabeeinheit 9, wobei die visuelle Ausgabeeinheit 9 ein Bildschirm eines mobilen Rechners ist, und der mobile Rechner datentechnisch zumindest mit der inertialen Messeinheit 7 verbunden ist. An einem distalen Ende des Robotermanipulators 3 ist ein Endeffektor angeordnet, der das Roboterglied 5 bildet und das Roboterglied 5 weist eine inertiale Messeinheit 7 auf. Diese inertiale Messeinheit 7 ermittelt die Richtung eines Schwerkraftvektors in einem unbewegten Zustand des Roboterglieds 5 mittels Beschleunigungssensoren, und ermittelt über eine Vielzahl von Zeitpunkten eine aktuelle Orientierung des Roboterglieds 5 gegenüber dem Schwerkraftvektor mittels mechanischer Lagekreisel, sei es im bewegten oder unbewegten Zustand des Roboterglieds 5. Die aktuelle Orientierung des Roboterglieds 5 gegenüber dem Schwerkraftvektor übermittelt die inertiale Messeeinheit 7 an die visuelle Ausgabeeinheit 9. Die visuelle Ausgabeeinheit 9 wiederum zeigt daraufhin die aktuelle Orientierung des Roboterglieds 5 gegenüber dem Schwerkraftvektor an. Die visuelle Ausgabeeinheit 9 weist ein erstes Anzeigeelement 11 in Form eines gestrichelten und gegenüber dem Bildschirm 9 ortsfest verbleibenden Kreuzes aus zwei rechtwinklig zueinander liegenden Balken auf. Außerdem weist die visuelle Ausgabeeinheit 9 ein zweites Anzeigeelement 12 in Form eines räumlich dargestellten Kreises auf. Ein erster Winkel des ersten Anzeigeelements 11 gegenüber dem zweiten Anzeigeelement 12 korreliert in jedem aus der Vielzahl der Zeitpunkte mit einem Winkel um eine erste Achse gemäß der relativen Orientierung des Roboterglieds 5 gegenüber dem Schwerkraftvektor. Ist ein zum Roboterglied 5 körperfest angeordnetes Koordinatensystem derart zum Schwerkraftvektor orientiert, dass eine Längsachse des Roboterglieds 5 mit der Richtung des Schwerkraftvektors korreliert, das heißt dass zwei andere Achsen des Koordinatensystems in einer horizontalen Ebene liegen, so blickt der Anwender direkt in die Ebene des Kreises 12, der dann mit der horizontalen Achse des ersten Anzeigeelements 11 korreliert. Bei einer von diesem Fall abweichender Orientierung des Roboterglieds 5 gegenüber dem Schwerkraftvektor wird der Kreis 12 entsprechend von zwei Lagewinkeln um eine jeweils horizontale Achse dargestellt, wobei die beiden horizontalen Achsen in einer horizontalen Ebene gegenüber der Erde verbleiben und die beiden horizontalen Achsen zueinander senkrecht liegen. Wird daher das Roboterglied 5 um eine erste horizontale Achse geneigt, so neigt sich die Kreisebene auf dem Bildschirm 9 gegenüber dem waagerechten Balken des ersten Anzeigeelements 11. Wird ferner das Roboterglied 7 um die zweite horizontale Achse geneigt, so ändert sich der gedachte

Blickwinkel des Anwenders auf den Kreis 12 von der Kreisebene hinaus mit einem Winkel auf die Kreisebene. Der Kreis 12 wird hierbei im allgemeinen als verzerrte Ellipse auf dem Bildschirm 9 dargestellt, wenn das Roboterglied 5 nicht korrekt über der horizontalen Ebene und damit gegenüber dem Schwerkraftvektor orientiert ist.

Fig. 2 zeigt eine visuelle Ausgabeeinheit 9, wobei die visuelle Ausgabeeinheit 9 ein LED-Array ist. Hierbei wird lediglich ein einzelner Winkel um genau eine Achse des Roboterglieds 5 relativ zum Schwerkraftvektor betrachtet. Weicht dieser Winkel von null ab, wird gemäß dem Vorzeichen dieses Winkels und korrelierend mit einem Betrag des Winkels eine linke Seite oder die rechte Seite des LED Arrays weiter nach rechts oder weiter nach links beleuchtet, das heißt es werden ausgehend vom Mittelpunkt in Richtung nach außen strebend eine bestimmte Zahl von LEDs beleuchtet.

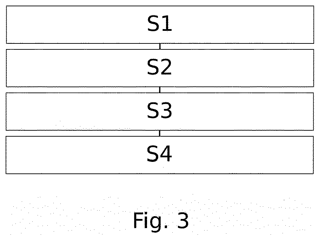

Fig. 3 zeigt ein Verfahren zum Ausgeben einer aktuellen Orientierung eines Roboterglieds 5 eines Robotermanipulators 3 gegenüber dem Schwerkraftvektor an einer visuellen Ausgabeeinheit 9, aufweisend die Schritte:
- Ermitteln S1 einer Richtung eines Schwerkraftvektors in einem unbewegten Zustand des Roboterglieds 5 mittels einer am Roboterglied 5 angeordneten inertialen Messeinheit 7,
- Ermitteln S2 einer aktuellen Orientierung des Roboterglieds 5 gegenüber dem Schwerkraftvektor mittels Lagekreisel der inertialen Messeinheit 7 über eine Vielzahl von Zeitpunkten,
- Übermitteln S3 der aktuellen Orientierung des Roboterglieds 5 gegenüber dem Schwerkraftvektor von der inertialen Messeinheit 7 an die visuelle Ausgabeeinheit 9, und
- Anzeigen S4 der aktuellen Orientierung des Roboterglieds 5 gegenüber dem Schwerkraftvektor an der visuellen Ausgabeeinheit 9.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert wird.

### Bezugszeichenliste

- 1: Robotersystem
- 3: Robotermanipulator
- 5: Roboterglied
- 7: inertiale Messeinheit
- 9: Ausgabeeinheit
- 11: erstes Anzeigeelement
- 12: zweites Anzeigeelement
- S1: Ermitteln
- S2: Ermitteln
- S3: Übermitteln
- S4: Anzeigen

## Patentansprüche

1. Robotersystem (1) mit einem Robotermanipulator (3) und mit einer visuellen Ausgabeeinheit (9),
wobei der Robotermanipulator (3) ein Roboterglied (5) aufweist und das Roboterglied (5) eine inertiale Messeinheit (7) aufweist,
wobei die inertiale Messeinheit (7) dazu ausgeführt ist, die Richtung eines Schwerkraftvektors in einem unbewegten Zustand des Roboterglieds (5) zu ermitteln, und über eine Vielzahl von Zeitpunkten eine aktuelle Orientierung des Roboterglieds (5) gegenüber dem Schwerkraftvektor mittels Lagekreisel zu ermitteln, und die aktuelle Orientierung des Roboterglieds (5) gegenüber dem Schwerkraftvektor an die visuelle Ausgabeeinheit (9) zu übermitteln, **dadurch gekennzeichnet, dass** die visuelle Ausgabeeinheit (9) ein LED-Array ist und dazu ausgeführt ist, die aktuelle Orientierung des Roboterglieds (5) gegenüber dem Schwerkraftvektor anzuzeigen.

2. Robotersystem (1) nach Anspruch 1,
wobei die visuelle Ausgabeeinheit (9) ein erstes Anzeigeelement (11) und ein zweites Anzeigeelement (12) aufweist, wobei eine Verschiebung und/oder eine Verdrehung zwischen dem ersten Anzeigeelement (11) und dem zweiten Anzeigeelement (12) in jedem aus der Vielzahl der Zeitpunkte mit zumindest einem Winkel um eine jeweilige Achse gemäß der relativen Orientierung des Roboterglieds (5) gegenüber dem Schwerkraftvektor korreliert.

3. Robotersystem (1) nach Anspruch 2,
wobei ein erster Winkel des ersten Anzeigeelements (11) gegenüber dem zweiten Anzeigeelement (12) in jedem aus der Vielzahl der Zeitpunkte mit einem Winkel um eine erste Achse gemäß der relativen Orientierung des Roboterglieds (5) gegenüber dem Schwerkraftvektor korreliert.

4. Robotersystem (1) nach einem der vorhergehenden Ansprüche,
wobei die inertiale Messeinheit (7) dazu ausgeführt ist, die Richtung des Schwerkraftvektors in einem unbewegten Zustand des Roboterglieds (5) mittels Beschleunigungssensoren zu ermitteln.

5. Robotersystem (1) nach Anspruch 4,
wobei die inertiale Messeinheit (7) dazu ausgeführt ist, auf Basis von mit den Beschleunigungssensoren gemessenen translatorischen Beschleunigungen und auf Basis einer aktuellen Orientierung des Roboterglieds (5) eine aktuelle Relativposition gegenüber einer Position in dem unbewegten Zustand des Roboterglieds (5) zu ermitteln

6. Verfahren zum Ausgeben einer aktuellen Orientierung eines Roboterglieds (5) eines Robotermanipulators (3) gegenüber dem Schwerkraftvektor an einer visuellen Ausgabeeinheit (9), die ein LED-Array ist, aufweisend die Schritte:
- Ermitteln (S1) einer Richtung eines Schwerkraftvektors in einem unbewegten Zustand des Roboterglieds (5) mittels einer am Roboterglied (5) angeordneten inertialen Messeinheit (7),
- Ermitteln (S2) einer aktuellen Orientierung des Roboterglieds (5) gegenüber dem Schwerkraftvektor mittels Lagekreisel der inertialen Messeinheit (7) über eine Vielzahl von Zeitpunkten,
- Übermitteln (S3) der aktuellen Orientierung des Roboterglieds (5) gegenüber dem Schwerkraftvektor von der inertialen Messeinheit (7) an die visuelle Ausgabeeinheit (9), und
- Anzeigen (S4) der aktuellen Orientierung des Roboterglieds (5) gegenüber dem Schwerkraftvektor an der visuellen Ausgabeeinheit (9).

## Claims

1. Robot system (1) with a robot manipulator (3) and with a visual output unit (9),
wherein the robot manipulator (3) comprises a robot element (5) and the robot element (5) comprises an inertial measurement unit (7),
wherein the inertial measurement unit (7) is designed to determine the direction of a gravity vector in an immobile state of the robot element (5), and to determine, over a plurality of points in time, a current orientation of the robot element (5) with relation to the gravity vector by means of sight-line gyro, and to transmit the current orientation of the robot element (5) with relation to the gravity vector to the visual output unit (9),
**characterized in that** the visual output unit (9) is an LED array and is designed to indicate the current orientation of the robot element (5) with relation to the gravity vector.

2. The robot system (1) according to Claim 1,
wherein the visual output unit (9) comprises a first display element (11) and a second display element (12), wherein a displacement and/or a rotation between the first display element (11) and the second display element (12) at each of the plurality of points in time correlates with at least one angle around a respective axis according to the relative orientation of the robot element (5) with relation to the gravity vector.

3. Robot system (1) according to Claim 2,
wherein a first angle of the first display element (11) with relation to the second display element (12) in each of the plurality of points in time correlates with an angle around a first axis according to the relative orientation of the robot element (5) with relation to the gravity vector.

4. Robot system (1) according to any one of the preceding claims,
wherein the inertial measurement unit (7) is designed to determine the direction of the gravity vector in a stationary state of the robot element (5) by means of acceleration sensors.

5. Robot system (1) according to Claim 4,
wherein the inertial measurement unit (7) is designed to determine a current relative position with relation to a position in the stationary state of the robot element (5) on the basis of translational accelerations measured with the acceleration sensors and on the basis of a current orientation of the robot element (5).

6. A method for outputting a current orientation of a robot element (5) of a robot manipulator (3) with relation to the gravity vector on a visual output unit (9), which is an LED array, comprising the steps:
- determining (S1) a direction of a gravity vector in a stationary state of the robot element (5) by means of an inertial measurement unit (7) arranged on the robot element (5),
- determining (S2) a current orientation of the robot element (5) with relation to the gravity vector by means of a sight-line gyro of the inertial measurement unit (7) over a plurality of points in time,
- transmitting (S3) the current orientation of the robot element (5) with relation to the gravity vector from the inertial measurement unit (7) to the visual output unit (9), and
- displaying (S4) the current orientation of the robot element (5) with relation to the gravity vector on the visual output unit (9).

## Revendications

1. Système de robot (1) avec un manipulateur de robot (3) et avec une unité de sortie visuelle (9),
sachant que le manipulateur de robot (3) comporte un organe de robot (5) et l'organe de robot (5) comporte une unité de mesure inertielle (7),
sachant que l'unité de mesure inertielle (7) est réalisée pour déterminer la direction d'un vecteur de force de gravité dans un état immobile de l'organe de robot (5) et déterminer sur une pluralité de moments une orientation actuelle de l'organe de robot (5) par rapport au vecteur de force de gravité au moyen d'un gyroscope de position et pour transmettre l'orientation actuelle de l'organe de robot (5) par rapport au vecteur de force de gravité à l'unité de sortie visuelle (9),
**caractérisé en ce que** l'unité de sortie visuelle (9) est un ensemble à diodes électroluminescentes (DEL) et est réalisée pour afficher l'orientation actuelle de l'organe de robot (5) par rapport au vecteur de force de gravité.

2. Système de robot (1) selon la revendication 1,
sachant que l'unité de sortie visuelle (9) comporte un premier élément d'affichage (11) et un deuxième élément d'affichage (12), sachant qu'un déplacement et/ou une rotation entre le premier élément d'affichage (11) et le deuxième élément d'affichage (12) est en corrélation à chacun des moments de la pluralité de moments avec au moins un angle autour de l'axe respectif selon l'orientation relative de l'organe de robot (5) par rapport au vecteur de force de gravité.

3. Système de robot (1) selon la revendication 2,
sachant qu'un premier angle du premier élément d'affichage (11) est en corrélation par rapport au deuxième élément d'affichage (12) à chacun des moments de la pluralité de moments avec un angle autour d'un premier axe selon l'orientation relative de l'organe de robot (5) par rapport au vecteur de force de gravité.

4. Système de robot (1) selon l'une quelconque des revendications précédentes,
sachant que l'unité de mesure inertielle (7) est réalisée pour déterminer la direction du vecteur de force de gravité dans un état immobile de l'organe de robot (5) au moyen de capteurs d'accélération.

5. Système de robot (1) selon la revendication 4,
sachant que l'unité de mesure inertielle (7) est réalisée pour déterminer une position relative actuelle par rapport à une position à l'état immobile de l'organe de robot (5) sur la base d'accélérations translatoires mesurées avec les capteurs d'accélération et sur la base d'une orientation actuelle de l'organe de robot (5).

6. Procédé destiné à fournir une orientation actuelle d'un organe de robot (5) d'un manipulateur de robot (3) par rapport au vecteur de force de gravité sur une unité de sortie visuelle (9), qui est un ensemble à diodes électroluminescentes (DEL), comprenant les étapes de :
- détermination (S1) d'une direction d'un vecteur de force de gravité dans un état immobile de l'organe de robot (5) au moyen d'une unité de mesure (7) inertielle disposée sur l'organe de robot (5),
- détermination (S2) d'une orientation actuelle de l'organe de robot (5) par rapport au vecteur de force de gravité au moyen d'un gyroscope de position de l'unité de mesure inertielle (7) sur une pluralité de moments,
- transmission (S3) de l'orientation actuelle de l'organe de robot (5) par rapport au vecteur de force de gravité de l'unité de mesure inertielle (7) à l'unité de sortie visuelle (9), et
- affichage (S4) de l'orientation actuelle de l'organe de robot (5) par rapport au vecteur de force de gravité sur l'unité de de sortie visuelle (9).
